# EUROPEAN PATENT APPLICATION

(11) **EP 1 980 632 A1**
(43) Date of publication of application: **15.10.2008**
(21) Application number: 07466007.7
(22) Date of filing: 02.04.2007
(51) Int. Cl.: C22B 1/243, C22B 7/04, C04B 12/00, C04B 28/00

(54) **The agglomeration of metal production dust with geopolymer resin**

(71) Applicant: Janiczkova, Ivona, 739 94 Trinec (CZ)
(72) Inventor: Antos, Petr, 403 31 Usti nad Labem (CZ); Dlouhy, Jan, 331 51 Kaznejov (CZ); Janiczkova, Ivona, 739 94 Trinec (CZ); Vins, Oldrich, 403 31 Usti nad Labem (CZ)

(57) **Abstract**

Processing wastes and secondary raw materials generated by the process of metallurgical treatment of metallic inputs, in particular dusts generated by steelmaking, through agglomeration in a granulator with a geo-polymeric agglomerant. The granulated product may be reused as charge for the melting unit as a source of metal, or iron.

## Description

### Technological Field

The invention belongs to the domain of processing of dust wastes generated by the metallurgical metal production processes, especially by ironmaking and steelmaking, which emerge as fine dust and are therefore non-processable or poorly processable.

### State of the Art

The key to quality of metallurgical processes are the properties of the liquid metal - its purity, chemistry and other characteristics. These requirements are beyond the potentials of electric arc furnace metallurgy. Therefore, the process of secondary metallurgy has grown in significance during the last two decades - with the primary melting taking place in the electric arc furnace and the end required quality being achieved outside the arc furnace during the secondary metallurgy process, namely during ladle furnace processing or during vacuum degassing and decarburisation of the steel. It is primarily the following processes that take place in the electric arc furnace: charge melting and heating to a specified temperature, metal decarburisation, bath dephosphorisation and slag-free tapping.

The electric arc furnace primarily uses ferrous scrap (and, to a lesser extent, pigs of iron) as the input charge. The contamination of steel scrap gradually increases primarily as a function of the growth of the content of non-ferrous elements in it, primarily zinc and copper. Depending on the type of the contamination, a proportion of the non-ferrous elements passes to steel while yet another proportion of them passes into the gaseous phase. The ladle furnace is used as a facility for the processing of liquid metal produced in the electric arc furnace. The main quality-related benefit of the ladle furnaces is the possibility of fine-tuning the alloying system and achieving high precision chemical composition of the steel. The adverse effect of the content of elements with the maximum segregating power - phosphorus and sulphur - is historically well-known in steel metallurgy and causes extensive heterogeneity across the ingots, which may only be partially removed as a result of the follow-up forming and heating procedures at substantial costs.

Whereas the phosphorus content in steel is determined by the oxidation phase of the heat in the electric arc furnace, the ladle furnace treatment will allow the steel in the ladle furnace to arrive at the minimum sulphur content. This will primarily reduce the steel's proneness to cracking incidence. The higher purity and homogeneity will yield improved utility properties of the steel - notch toughness, strength, fatigue strength and creep strength. Melting of metals in melting units, such melting iron and steel in electric arc and ladle furnaces, generates particles of dust, which, along with the gases generated during the melting, are collected into a filtration facility (fabric filters) which entraps the dust particles referred to as ashes. The chemical composition of these particles predominantly involves ferrous oxides (approx. 50 wt. %.), oxides of alloying metals and oxides of alkali earths that get into the ashes from the slag. Depending on the melting technology, the ashes contain a certain percentage of metals in their (elementary) form. The quantity of ashes is generally several percent of the quantity of the metal produced. Given the form in which they are generated in the metallurgical process, no processing method is possible for the waste and so far, it has been mostly deposited at dump sites. Considering the high ratio of metal, they are predetermined to be applied as a secondary raw material for metallurgical treatment, yet they must be compacted beforehand using an appropriate agglomeration procedure in such a way that the material could be handled, charged into the melting unit and that the contained metal could be used in the melting process without leaving a substantial part of the ashes leak into the filtration facility.

The initial efforts at using the ashes generated by the metallurgical processes may be traced back to approximately thirty years ago. The treatment routes for the processing of ashes generated by metallurgical productions may be divided into two major groups.

One group of the processes deals with the processing of ashes using the wet route, i.e. chemically (lying using various agents), whereas the other group of processes uses the melting procedures (furnace sintering with various additions) and mechanic agglomeration with the use of various types of agglomerants of both organic and inorganic origin. The first group of processes is, for instance, represented by the Japanese JP 2000189923 patent (11 July, 2000), where the ashes from the electric arc furnaces are first alkali-lied and then bound with cement or cement combined with blast furnace slag. The American US 6500229 patent (31 December, 2002) uses lying to remove soluble salts followed by heat treatment at between 240 and 800 °C and treatment with 5-8% solution of sulphuric acid. The melting processes are best captured by the JP 7268500 patent (17 October, 1995), where the dust is melted in a furnace with a reduction shroud in the presence of bauxite melting residues. The chemical and heat treatment processes for ashes are not cost-efficient, are characterised by substantial energy consumption, and, in the event of chemical processing of ashes from the metallurgical processes, they moreover generate further hazardous wastes in the liquid phase. The optimal way of processing ashes is agglomeration at ambient temperatures using the simplified agglomeration procedure with the use of appropriate agglomerants.

Appropriate agglomerants are such that contain flux components (compounds of aluminium, calcium) and whose contents of detrimental components (phosphorus, sulphur) are as low as possible and where the carbon content or the content of its compounds is limited to the utmost extent. The British patent, GB 1154746, (11 June, 1969) makes use of an addition of 1-5 wt. % of bentonite, 1 wt.% of HCl and 8 wt. % of pure coke. The US patent, 4529446 (16 July, 1985), uses ammonium polyphosphate and magnesia as the agglomerant. The Japanese JP 2005082846 patent (31 March, 2005) mixes dust generated from the electric arc furnace with reduction slag in the ratio of 1:0.6-1.2 and then briquettes it. The resultant product is then reused as charge for the electric arc furnace. JP 55003824 (11 January, 1980) uses cement and water as the agglomerant, JP 2004353016 (16 December, 2004) binds the dust using a mixture of 5-25 % silicon carbide in mineral oil. The ES 2161586 patent (1 December, 2001) uses the pozzolana and hydration reaction of the dust generated by the metallurgical steelmaking process with slaked lime. The Russian RU 3188740 patent (10 September, 2002) agglomerates ashes with the dust generated by the aluminium production process (a carbon bearing component) and sulphite leach as the agglomerant. The Japanese JP 2004052052 patent (19 February, 2004) uses 2-15 % addition of unslaked lime. Organic agglomerants are used, for instance, in Japanese patents, JP 2001214222 (7 August, 2001) - agglomeration using hunks or grain flour and JP 2003247026 (5 September, 2003**) -** briquetting using 5-15% solution of polyvinyl alcohol or carboxymehylcellulose (0.8-1.7 %) and an addition of coke. The JP 2004076148 patent (11 March, 2004) also makes use of the process of compacting in the presence of cement or hunks and dust coke. The French FR 2810903 patent (4 January, 2002) involves compacting the ashes with an addition of 0.5-10 % of lime, 0.5-10 % of sodium bicarbonate and 0.5-10 % chelating agent (heterocyclic derivates of sulphur such as trimethyltriazine, dimercaptothiadiasol). The above shows that a prevailing majority of the given agglomerants deteriorate the utility properties of the agglomerated ashes generated by metallurgical processes to be re-processed in a melting unit, namely due to the fact that they contain compounds of sulphur and phosphorus and substantial quantities of carbon in the form of coke or organic compounds. These disadvantages are eliminated with the use of the below invention.

### Gist of the invention

The aim of the invention is to process dust waste generated by metallurgical processes through agglomeration in such a way as to obtain a product that will be processable as a secondary raw material in metallurgical processes. The dust particles (at a medium grain size measured in micrometers) contain a substantial quantity of metals, both in the form of oxides and in the elementary (metallic) form. The metallic fractions may be used in the agglomerating process in order to harden any appropriate agglomerant while the additions used for the agglomeration must not deteriorate or substantially affect the melting process and must not have an effect on the product or slag quality.

The gist of the invention is the method of agglomeration of dust particles generated by metallurgical processes and containing both ferrous and non-ferrous metals in both metallic and oxide forms, characterised by the fact that the dust particles, at the quantity of 8 to 20 weight parts are mixed with 0.7-6 weight parts of water and 0.5 - 4 weight parts of a geo-polymeric agglomerant and that the agglomeration of the particles occurs as a result of a chemical reaction between the agglomerant and the components of the agglomerated particles that are in the metallic form. Iron and zinc display the highest reactivity and constitute the main component of dust generated during steelmaking.

Geo-polymeric resin is used as the geo-polymeric agglomerant, at the molar volume of Si : Al : Na 90-150 : 90-150 : 7-15 and dry content of 20-50 wt. %. A plate granulator with the speed of 0.5 - 60 rev.min⁻¹ will be preferably used for the agglomeration, to sprinkle the dust particles using nozzles with a source of water and geo-polymeric agglomerant. During the agglomeration, spherical particles will be generated at the size ranging between several millimetres and one centimetre. The growth of the particle grain size by a factor of 1000 to 10 000 makes it possible to process agglomerated particles as secondary raw materials-sources of both metal and slag in the metallurgical process. The described method of agglomeration of dust particles makes it possible to create granules agglomerated with a geo-polymeric agglomerant without increasing the carbon content, without increasing the volume of crystal water and with a minimum growth of detrimental additions compared to the input material. The granules produced in this way are not subject to disintegration at high temperatures into the original dust portions.

The granulation takes place at ordinary temperature conditions without increasing the pressures while the facility used for the granulation is not exuberant in terms of energy consumption. The resultant product is stable up to the liquidus temperature of 1250-1300 °C, which is the melting temperature of common types of synthetic slags based on calciumaluminates. The granulation product does not display any increased carbon content, therefore it does not cause the steel to recarburise and the components of the agglomerant are similar by their composition to the composition of fluxes.

### Examples of Application of the Invention

### Example 1

The steelmaking dust generated by the steelmaking process in electric arc furnaces was described using an X-ray fluorescent analysis (elementary composition), gravimetry (humidity and annealing related loss) and laser difractography (distribution of particles) and the following results were obtained:

| **Parameter** | **Value** |
|---|---|
| Loss due to drying | 1.26 wt. % |
| Annealing loss 1000 °C | 3.72 wt. % |
| Specific weight | 3.732 g.cm⁻³ |
| Bulk density | 1.191 g.cm⁻³ |
| Medium particle size | 2.4 µm |
| 10 % of the volume of particles is smaller than | 0.9 µm |
| 90 % of the volume of particles is smaller than | 33.6 µm |
| Fluor (as F) | 5.6 % |
| Sodium (as Na₂O) | 1.1 weight % |
| Aluminium (as Al₂O₃) | 1.4 weight % |
| Silicon (as SiO₂) | 7.2 weight % |
| Potassium (as K₂O) | 1.1 weight % |
| Sulphur (as SO₃) | 0.48 weight % |
| Chlorine (as Cl) | 0.94 weight % |
| Calcium (as CaO) | 4.5 weight % |
| Chromium (as Cr₂O₃) | 12.2 weight % |
| Manganese (as MnO) | 3.8 weight % |
| Iron (as Fe₂O₃) | 50.4 weight % |
| Nickel (as NiO) | 0.3 weight % |
| Zinc (as ZnO) | 4.3 weight % |
| Copper (as CuO) | 0.2 weight % |
| Molybdenum (as MoO₃) | 0.6 weight % |
| Lead (as PbO) | 0.4 weight % |

These ashes were batched to a plate granulator with the granulation plate diameter of 1 400 mm, speed of 3.87 revolutions per minute at the rate of 466.7 kg·hour⁻¹. At the same time, water at the rate of 57.3 kg·hour⁻¹ was supplied to the plate along with a geo-polymeric agglomerant displaying the composition of 28 wt. % SiO₂, 15 wt. % Na₂O and 2 wt. % Al₂O₃ at the rate of 37.8 kg·hod⁻¹. During the revolutions of the granulator, wetting-down and agglomeration of the originally dust particles occurred and spherical bodies were formed at the mean particle size of approx. 10 mm at the rate of approx. 560 kg·hour⁻¹. The granulated dust generated by the steelmaking process was analysed using X-ray fluorescent spectrometry and gravimetry. The measurement of point strength of the granules was performed using TMZ-3U electronic machine. The obtained results are given in the table below.

| **Parameter** | **Value** |
|---|---|
| Bulk density | 1,278 g.cm⁻³ |
| Mean particle size D(50) | 10,5 mm |
| 10 % of the volume of the | |
| | 7,2 mm |
| particles was smaller than | |
| 90 % of the volume of particles | 13 mm |
| was smaller than | |
| Point strength of granules | 90,4 N |
| Fluor (as F) | 3,2 wt.% |
| Sodium (as Na₂O) | 3,7 wt.% |
| Aluminium (as Al₂O₃) | 1,3 wt.% |
| Silicon (as SiO₂) | 12,4 wt.% |
| Potassium (as K₂O) | 1,0 wt.% |
| Sulphur (as SO₃) | 0,4 wt.% |
| Chlorine (as Cl) | 0,9 wt.% |
| Calcium (as CaO) | 4,0 wt.% |
| Chromium (as Cr₂O₃) | 11,8 wt.% |
| Manganese (as MnO) | 3,7 wt.% |
| Iron (as Fe₂O₃) | 48,4 wt.% |
| Nickel (as NiO) | 0,2 wt.% |
| Copper (as CuO) | 0,2 wt.% |
| Molybdenum (as Mo0₃) | 0,4 wt.% |
| Lead (as PbO) | 0,3 wt.% |
| Zinc (as ZnO) | 0,3 wt.% |

The agglomerated steelmaking dust was batched in quantities of 5 wt. % related to the weight of ferrous scrap charge into the electric arc furnace. During the melting process, no negative effect of treating the agglomerated dust onto the quality of steel or any increased incidence of dust particle fly ashes from the melting unit were observed.

### Industrial Applicability

The above method of processing dust wastes generated by metallurgical processes makes it possible to use metals in both metallic and oxide forms which have a strong presence in these wastes. The method makes it possible to treat secondary raw materials and wastes in high-temperature metallurgical processes, where it would not be possible to treat them technologically in the dust state and where they would normally have to be deposited at dump sites.

## Claims

1. The method of agglomeration of dust wastes generated by metallurgical processes containing ferrous and non-ferrous metals in both metallic and oxide forms where 8 - 20 weight parts of the dust particles at the mean particle grain size of 0.5-1 000 µm are mixed with 0.7- 6 weight parts of water and 0.5 - 4 weight parts of a geo-polymeric agglomerant and that the agglomeration of the particles occurs as a result of the reaction of the agglomerant and with the metallic component of the agglomerated particles.

2. The method of agglomerating the dust wastes is as specified under point 1 where geo-polymeric resin at the molar ratio of Si : Al : Na 90-150 : 90-150 : 7-15 and dry content of 20-50 wt.% is used as the geo-polymeric agglomerant.

3. The method agglomerating of dust wastes is as specified under point 1 where a plate granulator with the speed of 0-5 - 60 re.min⁻¹ will be advantageously used for the agglomeration.
